# EUROPÄISCHE PATENTSCHRIFT

(11) **EP 2 953 728 B1**
(45) Veröffentlichungstag und Bekanntmachung des Hinweises auf die Patenterteilung: **31.03.2021**
(21) Anmeldenummer: 14701467.4
(22) Anmeldetag: 15.01.2014
(51) Int. Cl.: B05B 14/43

(54) **VERFAHREN ZUM BETREIBEN EINER OBERFLÄCHENBEHANDLUNGSANLAGE**
METHOD FOR OPERATING A SURFACE TREATMENT SYSTEM
PROCÉDÉ DE FONCTIONNEMENT D'UNE INSTALLATION DE TRAITEMENT DE SURFACE

(30) Priorität: 07.02.2013 DE 102013002041
(43) Veröffentlichungstag der Anmeldung: 16.12.2015
(73) Patentinhaber: Eisenmann SE, 71032 Böblingen (DE)
(72) Erfinder: RÖCKLE, Jürgen, 71106 Magstadt (DE)
(74) Vertreter: Ostertag & Partner Patentanwälte mbB
(86) Internationale Anmeldenummer: PCT/EP2014/000083
(87) Internationale Veröffentlichungsnummer: WO 2014/121882

(56) Entgegenhaltungen:
- WO-A2-03/084638
- DE-U1-202011 107 555
- SE-A- 9 002 238

## Beschreibung

Die Erfindung betrifft ein Verfahren zum Betreiben einer Oberflächenbehandlungsanlage, bei welchem Overspray, der in einer oder mehreren Beschichtungskabinen entsteht, von einem Luftstrom aufgenommen und zu einer oder mehreren Einweg-Abscheideeinheiten geführt wird, in denen Overspray abgeschieden wird und welche jeweils nach Erreichen einer Grenzbeladung mit Overspray als beladene Einweg-Abscheideeinheiten gegen eine leere Einweg-Abscheideeinheit ausgetauscht werden.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren werden die Begriffe Overspray, Overspraypartikel oder Oversprayfeststoffe immer im Sinne eines dispersen Systems, wie einer Emulsion oder Suspension oder einer Kombination daraus, verstanden. Der Overspray wird von dem Luftstrom in der Lackierkabine erfasst und einer Abscheidung zugeführt, so dass die Luft gegebenenfalls nach einer geeigneten Konditionierung wieder in die Beschichtungskabine zurückgeleitet werden kann.

Insbesondere bei Anlagen mit größerem Lackverbrauch, beispielsweise bei Anlagen zum Lackieren von Fahrzeugkarosserien, kommen in bekannter Weise bevorzugt Nassabscheidesysteme einerseits oder elektrostatisch arbeitende Trockenabscheider andererseits zum Einsatz. Bei bekannten Nassabscheidern wird verhältnismäßig viel Energie zur Umwälzung der erforderlichen, recht großen Wassermengen benötigt. Die Aufbereitung des Spülwassers ist durch den hohen Einsatz an Lack bindenden und entklebenden Chemikalien und durch die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat. Bei elektrostatisch arbeitenden Trockenabscheidern muss der Lack-Overspray kontinuierlich von den Abscheideflächen entfernt werden, was meist mit baulich recht aufwendigen Maßnahmen verbunden ist und entsprechend störanfällig sein kann. Zudem ist der Energieaufwand bei solchen Abscheidern verhältnismäßig hoch.

Als Alternative zu gängigen, stationären Nass- und Trockenabscheidesystemen, die auch elektrostatisch arbeiten können, kommen auch Systeme mit austauschbaren Einweg-Abscheideeinheiten zum Einsatz, die nach Erreichen einer Grenzbeladung mit Overspray gegen unbeladene Filtermodule ausgetauscht und entsorgt oder gegebenenfalls recycled werden. Die Aufbereitung und/oder Entsorgung von derartigen Abscheideeinheiten kann energetisch und auch im Hinblick auf die erforderlichen Ressourcen verträglicher sein als der Aufwand bei einem Nassabscheider oder einer elektrostatisch arbeitenden Abscheidevorrichtung.

Üblicherweise werden die erhaltenen, beladenen Einweg-Abscheideeinheiten unmittelbar zerkleinert und dann, je nach Art des aufgenommenen Oversprays, auf einer Deponie entsorgt oder in einer Verbrennungsanlage verbrannt

Herkömmliche Verfahren, in denen Einweg-Abscheideeinheiten einer Verbrennungsanlage zugeführt werden, sind in den Dokumenten WO 03/084638 A2, SE 9 002 238 A und DE 20 2011 107555 U1 beschrieben.

Es ist Aufgabe der Erfindung, den Verwertungsprozess der beladenen Abscheideeinheiten zu verbessern.

Diese Aufgabe wird bei einem Verfahren der eingangs genannten Art dadurch gelöst, dass aus beladenen Einweg-Abscheideeinheiten ein Aufbereitungsmaterial erzeugt wird, welches eine spätere Verwertung ermöglicht. Unter Verwertung wird vorliegend einerseits eine Nutzbarmachung, wie beispielsweise eine Verbrennung, bei der Energie gewonnen werden kann, oder die Verwendung als Zusatzstoff für andere Materialien, die aufbereitet werden sollen, andererseits aber auch eine Deponie-Entsorgung verstanden.

Die Erfindung beruht auf der Erkenntnis, dass es aus energetischer Sicht und im Hinblick auf die Ressourcenverträglichkeit sinnvoll ist, die beladenen Abscheideeinheiten zunächst zu behandeln und aus diesen ein modifiziertes Aufbereitungsmaterial zu erzeugen, welches dann deponiert oder einer Wertstoffverwertung zugeführt wird. Ein solches Aufbereitungsmaterial kann beispielsweise einen gegenüber den unbehandelten beladenen Abscheideeinheiten derart höheren Heizwert haben, dass die Energiebilanz trotz der notwendigen Behandlungsschritte verbessert ist.

Dabei kann es günstig sein, wenn das Aufbereitungsmaterial in einer Aufbereitungsanlage erzeugt wird, welche der Oberflächenbehändlungsanlage angegliedert ist. Hierdurch sind insbesondere kurze Transportwege möglich und die Aufbereitung kann durch den Betreiber der Oberflächenbehandlungsanlage erfolgen.

Alternativ kann es von Vorteil sein, wenn das Aufbereitungsmaterial in einer Aufbereitungsanlage erzeugt wird, welche von der Oberflächenbehandlungsanlage ausgegliedert ist. In diesem Fall kann die Aufbereitungsanlage durch einen Drittanbieter betrieben werden, der von dem Betreiber der Oberflächenbehandlungsanlage mit der Aufbereitung beauftragt wird.

Häufig umfassen Oberflächenbehandlungsanlagen mehrere Beschichtungskabinen, in denen unterschiedliche Arten von Overspray entstehen. Fahrzeugkarosserien beispielsweise werden in verschiedenen Beschichtungskabinen mit einem Primer, einem Basislack und einem Decklack beschichtet. In diesem Fall kann es alternativ günstig sein, dass
a) beladene Einweg-Abscheideeinheiten unabhängig davon, mit welcher Art Overspray sie beladen sind, in der Aufbereitungsanlage gemeinsam aufbereitet werden;
   oder
b) jeweils solche beladene Filtermodule gemeinsam aufbereitet werden, die von ein und derselben oder von artgleichen Beschichtungskabinen stammen, so dass die gemeinsam aufbereiteten Filtermodule mit Overspray der gleichen Art beladen sind und ein bezogen auf die Art des Overspray sortenreines Aufbereitungsmaterial erhalten wird.

Die jeweilige Vorgehensweise wird abhängig von der Art des Oversprays, aber auch abhängig von der Art und den Materialeigenschaften der Einweg-Abscheideeinheiten ausgewählt.

Wenn die Aufbereitung gemäß dem obigen Schritt b) durchgeführt wird, kann es von Vorteil sein, wenn verschiedene sortenreine Aufbereitungsprodukte zu einem gemischten Aufbereitungsmaterial zusammengeführt werden. Dieses gemischte Aufbereitungsprodukt kann dann wieder entweder deponiert oder einer Wertstoffverwertung zugeführt werden.

Es ist besonders günstig, wenn das Aufbereitungsmaterial einer thermischen Verwertung zugeführt wird.

Vorzugsweise erfolgt die thermische Verwertung durch Verbrennen in einer Verbrennungsanlage.

Im Hinblick auf die Verfahrenseffizienz ist es vorteilhaft, wenn die Verbrennungsanlage der Oberflächenbehandlungsanlage angegliedert ist.

Insbesondere in diesem Fall kann Energie, die bei der thermischen Verwertung gewonnen wird, zum Betreiben der Oberflächenbehandlungsanlage und/oder der Aufbereitungsanlage genutzt werden.

Bei der Erzeugung des Aufbereitungsmaterials aus beladenen Einweg-Abscheideeinheiten werden die Einweg-Abscheideeinheiten getrocknet und vorzugsweise einer oder mehrere der folgenden Schritte durchgeführt:
a) Grobes Zerkleinern oder Verkleinern der beladenen Abscheideeinheiten zu Filterteilen oder Filterpaketen;
b) Schreddern der beladenen Abscheideeinheiten oder von Filterteilen oder von Filterpaketen zu Grobschreddermaterial oder zu Feinschreddermaterial;
c) Zumischen von Zusätzen beim Trocknen oder bei einem oder mehreren der obigen Schritte a) oder b).

Diese Schritte können allein oder in Kombination miteinander durchgeführt werden, wobei auch die Reihenfolge geändert werden kann. Auf das Zumischen von Zusätzen wird weiter unten nochmals eingegangen.

Nachfolgend werden Ausführungsbeispiele der Erfindung anhand der Zeichnungen näher erläutert. In diesen zeigen:
- Figur 1: eine Lackierkabine mit einer Abscheidevorrichtung für Overspray gemäß einem ersten Ausführungsbeispiel in einer Vorderansicht, bei welcher mit Overspray beladene Kabinenluft zu Einweg-Filtermodulen geleitet wird;
- Figur 2: ein Übersichtsschema, in dem die Verwendung von Filtermodulen und verschiedene Verwertungswege für beladene Filtermodule veranschaulicht sind;
- Figur 3: schematisch verschiedene Behandlungsstationen in einer Aufbereitungsanlage, in denen beladene Filtermodule einer Behandlung unterzogen werden können, welche die Verwertung unterstützen.

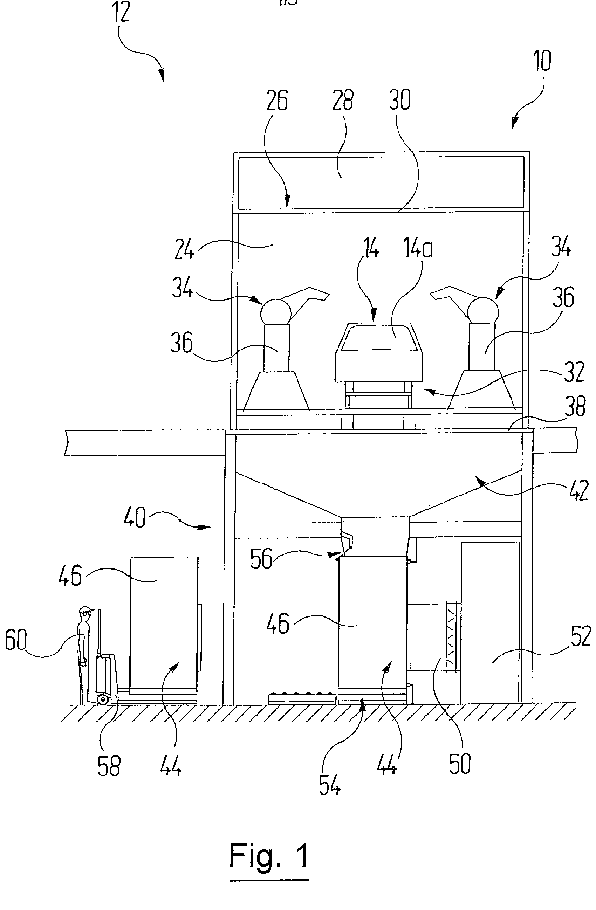

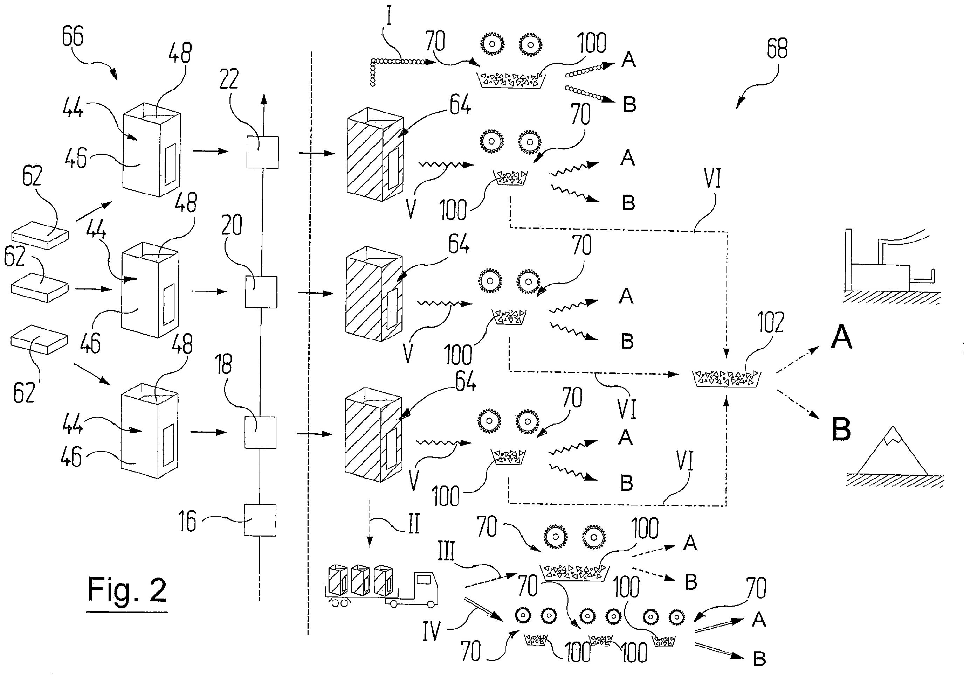

In Figur 1 ist mit 10 insgesamt eine Beschichtungskabine einer Oberflächenbehandlungsanlage 12 bezeichnet, in welcher Gegenstände 14 lackiert werden. Als Beispiel für zu lackierende Gegenstände 14 sind Fahrzeugkarosserien 14a gezeigt. Bevor diese zu einer solchen Beschichtungskabine 10 gelangen, wurden sie in Vorbehandlungsstationen 16 z.B. gereinigt und entfettet, von denen in Figur 2 eine schematisch gezeigt ist.

Hiernach werden die Fahrzeugkarosserien 14a in aufeinander folgenden Beschichtungsstationen 18, 20 und 22 mit einem Primer, einem Basislack und einem Decklack versehen, wie es an und für sich bekannt ist. Hierzu ist in jeder Beschichtungsstation 18, 20, 22 eine Beschichtungskabine 10 angeordnet, in welcher das jeweilige Beschichtungsmaterial auf die Fahrzeugkarosserie 14a appliziert wird.

In jeder Behandlungskabine 10 der unterschiedlichen Behandlungsstationen 18, 20 und 22 entstehen unterschiedlichen Arten von Overspray, d.h. allgemein ausgedrückt umfasst die Oberflächenbehandlungsanlage 12 mehrere Beschichtungskabinen 10, in denen unterschiedliche Arten von Overspray entstehen.

Die Beschichtungskabine 10 hat einen oben angeordneten Beschichtungstunnel 24 mit einer Decke 26, die in üblicher Weise als untere Begrenzung eines Luftzuführraumes 28 mit Filterdecke 30 ausgebildet ist.

Die Fahrzeugkarosserien 14a werden mit einem im Beschichtungstunnel 24 untergebrachten und an und für sich bekannten Fördersystem 32 von der Eingangsseite des Beschichtungstunnels 24 zu dessen Ausgangsseite transportiert werden. Im Inneren des Beschichtungstunnels 24 befinden sich Applikationseinrichtungen 34 in Form von mehrachsigen Applikationsrobotern 36, wie sie ebenfalls an und für sich bekannt sind. Mittels der Applikationsroboter 36 können die Fahrzeugkarosserien 14a mit dem entsprechenden Material beschichtet werden.

Nach unten hin ist der Beschichtungstunnel 24 über einen begehbaren Gitterrost 38 zu einem darunter angeordneten Anlagenbereich 40 hin offen, in welchem von der Kabinenluft mitgeführten Overspraypartikel von der Kabinenluft getrennt werden.

Aus dem Luftzuführraum 28 strömt während des Beschichtungsvorgangs Luft nach unten durch den Beschichtungstunnel 24 hindurch zu dem Anlagenbereich 40, wobei die Luft im Beschichtungstunnel 24 vorhandenen Lack-Overspray aufnimmt und mit sich führt.

Diese mit Overspray beladene Luft wird mit Hilfe einer Luftleiteinrichtung 42 zu mehreren Einweg-Abscheideeinheiten 44 geleitet, welche beim vorliegenden Ausführungsbeispiel in Form von Einweg-Filtermodulen 46 ausgebildet sind. Nachstehend wird auf Filtermodule Bezug genommen, die Ausführungen hierzu gelten sinngemäß entsprechend für Einweg-Abscheideeinheiten 44 allgemein, die auch anders als die beschriebenen Filtermodule 46 ausgebildet sein können.

Jedes Filtermodul 46 kann in an und für sich bekannter Art und Weise zum Beispiel als Abscheidefilter oder als Trägheitsfilter oder auch als eine Kombination davon ausgebildet sein.

Im Betrieb ist jedes Filtermodul 46 strömungstechnisch und lösbar mit der Luftleiteinrichtung 42 verbunden. Die Kabinenluft durchströmt in dem Filtermodul 46 eine Filtereinheit 48, an der sich der Lack-Overspray abscheidet. Die Filtereinheit 48 ist lediglich bei den perspektivisch gezeigten Filtermodulen 46 in Figur 2 zu erkennen. Insgesamt ist jede Einweg-Abscheideeinheit 44 als austauschbare Baueinheit ausgebildet.

Die nun weitgehend von Overspraypartikeln befreite Kabinenluft strömt aus dem Filtermodul 46 in einen Zwischenkanal 50, über den sie in einen Sammelströmungskanal 52 gelangt. Die Kabinenluft wird über den Sammelströmungskanal 52 einer weiteren Aufbereitung und Konditionierung zugeführt und im Anschluss daran in einem hier nicht eigens gezeigten Kreislauf wieder in den Luftzuführraum 28 geleitet, aus dem sie wieder von oben in den Beschichtungstunnel 24 einströmt. Falls die Kabinenluft durch die vorhandenen Filtermodule 46 noch nicht ausreichend von Overspraypartikeln befreit ist, können den Filtermodulen 46 noch weitere Filterstufen nachgelagert sein, denen die Kabinenluft zugeführt wird und in denen beispielsweise Vliesfilter oder auch elektrostatisch arbeitende Abscheidefilter eingesetzt werden, wie sie an und für sich bekannt sind. Gegebenenfalls können eine oder mehrere solcher weiteren Filterstufen auch in das Filtermodul 46 integriert sein.

Das Filtermodul 46 ruht in seiner Betriebsstellung auf einer Waage 54 und ist mittels einer Verriegelungseinrichtung 56 in seiner Betriebsstellung arretiert. Beim vorliegenden Ausführungsbeispiel kann das Filtermodul 46 strömungstechnisch mit der Luftleiteinrichtung 42 verbunden oder von dieser gelöst werden, indem es in horizontaler Richtung bewegt wird. Allgemein hängt die Koppel- und Entkoppelbewegung jedoch von dem Zusammenspiel der Komponenten ab.

Jedes Filtermodul 46 ist für die Aufnahme einer maximalen Lackmenge, d.h. für eine Grenzbeladung mit Overspray, ausgelegt, die von der Bauart des Filtermoduls 46 und den für dieses verwendeten Materialien abhängt. Die bereits aufgenommene Lackmenge kann über die Waage 54 überwacht werden. Alternativ kann die Grenzbeladung mittels einer Differenzdruckbestimmung ermittelt werden. Je größer die Beladung des Filtermoduls 46 ist, desto größer ist der durch das Filtermodul 46 aufgebaute Luftwiderstand.

Wenn ein Filtermodul 46 seine maximale Aufnahmekapazität erreicht, wird die Verriegelungseinrichtung 56 gelöst und das voll beladene Filtermodul 46 aus dem unteren Anlagenbereich 40 der Beschichtungskabine 10 herausgefahren. Dies kann beispielsweise mit Hilfe eines Hubwagens 58 erfolgen, der von einem Werker 60 bedient wird. Hierzu kann der Bodenbereich des Filtermoduls 46 in seiner Geometrie und seinen Abmessungen als standardisierte Tragstruktur und beispielsweise nach Vorgabe einer so genannten Euro-Palette ausgebildet sein.

Zuvor wird die Strömungsverbindung des auszutauschenden Filtermoduls 46 mit der Luftleiteinrichtung 42 mittels nicht eigens gezeigter Sperrschieber verschlossen. Dann wird ein leeres Filtermodul 46 in die Betriebsstellung geschoben, in der dieses strömungsdicht mit der Luftleiteinrichtung 42 verbunden ist, worauf die Verriegelungseinrichtung 54 wieder arretiert wird. Der Sperrschieber der Luftleiteinrichtung 42 wird wieder in eine Offenstellung gebracht, so dass das neu positionierte Filtermodul 46 von der Kabinenluft durchströmt wird.

Das Einweg-Filtermodul 46 kann insgesamt, einschließlich seiner Filtereinheit 48, aus einem nassfesten Recyclingmaterial gefertigt sein. Allgemein ausgedrückt können eine Komponente, mehrere Komponenten oder alle Komponenten des Filtermoduls 46 aus einem nassfesten Recyclingmaterial gefertigt sein. Hierfür kommen beispielsweise Cellulosematerialien wie gegebenenfalls behandelte Papier- und Pappmaterialien, Wellkarton, Kartone mit stehender Welle, Kartone mit Wabenstruktur oder Wickelkartone, aber auch anderer Materialien wie z.B. MDF-Materialien in Frage. Der Bodenbereich des Filtermoduls 46 kann auch separat durch eine Euro-Palette aus Holz gebildet sein. Auch Kunststoffe wie insbesondere Polyethylen oder Polypropylen kommen in Frage.

Dabei kann das Filtermodul 46 selbst als modularer Bausatz in Einzelteilen geliefert werden und am Ort der Oberflächenbehandlungsanlage 12 zusammengebaut werden. Beispielsweise kann ein Filtermodul 46 auch so konzipiert sein, dass es aus einer zusammengefalteten Konfiguration entfaltet werden kann. Ein Filtermodul-Bausatz hat ein Volumen, das beträchtlich kleiner sein kann als das Volumen der entfalteten oder aufgebauten Einweg-Filtermodule 46. In Figur 2 ist dies anhand von Filtermodul-Bausätzen 62 veranschaulicht.

Nachstehend wird nun auf Figur 2 Bezug genommen, welche die Verwendung der Filtermodul-Bausätze 62 bzw. der Filtermodulen 46 und verschiedene Verwertungswege von beladenen Abscheideeinheiten bzw. Filtermodulen veranschaulicht, die dort das Bezugszeichen 64 tragen. Dort gliedert sich der Ablauf in eine Gebrauchsphase 66 der Filtermodule 46 und eine Verwertungsphase 68 der beladenen Filtermodule 64, die in Figur 2 durch eine gestrichelte Linie voneinander getrennt gezeigt sind.

In der Gebrauchsphase 66 können wahlweise Filtermodul-Bausätze 62 oder bereits einsatzfähige Filtermodule 46 zur Oberflächenbehandlungsanlage 12 bzw. zu derjenigen Beschichtungskabine 10 verbracht werden, in der die Filtermodule 46 eingesetzt werden sollen. Im Falle der Filtermodul-Bausätze 62 werden daraus vor Ort die Filtermodule 46 hergestellt und dann in der oben beschriebenen Art und Weise in den Beschichtungskabinen 10 der Beschichtungsstationen 18, 20 und 22 verwendet.

Die nach Erreichen der Grenzbeladung erhaltenen und aus der jeweiligen Beschichtungskabine 10 entnommenen beladenen Filtermodule 64 werden dann in der Verwertungsphase 68 verwertet, wozu verschiedene Wege möglich sind. Die beladenen Filtermodule 64 sind abhängig davon, aus welcher Behandlungskabine 10 sie stammen, mit unterschiedlichen Arten von Overspray beladen.

In Figur 2 sind insgesamt beispielhaft sechs Verwertungswege I, II, III, IV, V und VI gezeigt, wobei gleichartige Pfeile jeweils einem Verwertungsweg zugeordnet sind.

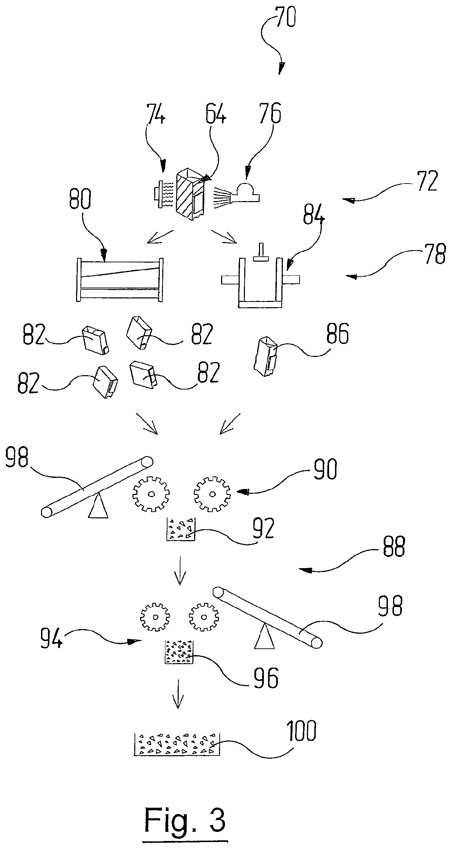

Auf jedem Verwertungsweg I bis VI werden die beladenen Filtermodule 64 in einer Aufbereitungsanlage 70 einer Aufbereitungsbehandlung unterzogen, um ein Aufbereitungsmaterial zu erzeugen, welches eine spätere Verwertung ermöglicht. Dies wird daher zunächst anhand Figur 3 erläutert, welche die Aufbereitungsanlage 70 mit beispielhaften Aufbereitungsstationen veranschaulicht.

In einer Trockenstation 72 werden die beladenen Filtermodule 64 getrocknet. Mit Trocknen sind dabei alle Vorgänge gemeint, bei denen der aufgenommene Overspray zum Aushärten gebracht werden kann, sei dies nun durch Austreiben von Lösemitteln oder durch Vernetzung der Beschichtungssubstanz. Hierzu kann der Overspray beispielsweise mit elektromagnetischen Strahlern 74 geliert oder mittels Gebläsen 76 mit warmer Luft temperiert werden.

In einer Zerkleinerungsstation 78. werden die Filtermodule 64 grob zerkleinert oder verkleinert. Dies kann beispielsweise durch eine Schneideinrichtung 80 erfolgen, in der die einzelnen Filtermodule 64 in kleinere Filterteile 82 zerschnitten werden. Alternativ können die Filtermodule 64 beispielsweise in einer Presseinrichtung 84 zu einem kleineren Filterpaket 86 zusammengepresst werden.

Die Filtermodule 64 oder die Filterteile 82 oder die Filterpakete 86 können in einer Schredderstation 88 mit Hilfe einer Grobschreddereinrichtung 90 zu Grobschreddermaterial 92 und gegebenenfalls mit Hilfe einer Feinschreddereinrichtung 94 zu Feinschreddermaterial 96 verarbeitet werden.

Dabei können jeweils Zusätze zugemischt werden, um die Konsistenz des Schreddermaterials 92 oder 96 oder dessen Eigenschaften, insbesondere dessen Heizwert, zu verändern und zu beeinflussen. Dies ist jeweils durch ein Förderband 98 angedeutet. So können zum Beispiel Stein- und Holzmaterialien in Form von Mehlen, Pulvern oder Stäuben sowohl als Bindemittel als auch zur Erhöhung des Heizwertes zugegeben werden. Auch kann das Material der Filtermodule 64 als Trägermaterial für Pasten oder Flüssigkeiten genutzt werden, die andernorts als Abfallprodukte anfallen und entsorgt oder verbrannt werden sollen und bei denen die weitere Behandlung auf Grund ihrer Konsistenz, pastös oder flüssig, erschwert ist.

Die erläuterten Behandlungsstationen 72, 78, 88 sollen nur exemplarisch sein und auch für nicht eigens erläuterte Aufbereitungsbehandlungen stehen, von denen abhängig von den Filtermodulen 64 und dem von diesen aufgenommenen Overspray alle, nur einige oder auch nur eine einzige durchlaufen werden können.

Mittels der Aufbereitungsanlage 70 wird ein Aufbereitungsmaterial 100 erhalten, welches gegenüber dem Ausgangsmaterial in Form der beladenen Filtermodule 64 andere physikalische Eigenschaften haben kann. Beispielsweise wurden durch die Behandlungen das Volumen, die Dichte, die Struktur, die Konsistenz und/oder die Feuchte und dergleichen verändert und gegebenenfalls gezielt eingestellt.

Auch die chemischen Eigenschaften des Aufbereitungsmaterials 100 können gegenüber den beladenen Filtermodulen 64 verändert worden sein. Insbesondere sind hier Eigenschaften wie Brennbarkeit, Flammpunkt, pH-Wert, Adhäsionsvermögen und dergleichen zu nennen.

Bei der Erzeugung des Aufbereitungsmaterials 100 kann auch dafür gesorgt werden, dass das Aufbereitungsmaterial 100 lagerfähig ist, so dass das Aufbereitungsmaterial 100 nach der Aufbereitungsanlage 70 zunächst zwischengelagert und gegebenenfalls gesammelt werden kann.

Beispielsweise kann das erhaltene Aufbereitungsmaterial 100 für eine Deponie-Entsorgung oder eine thermische Verwertung konzipiert ist. Eine Deponie-Entsorgung des Materials ist in Figur 3 durch eine mit dem Buchstaben A bezeichnete Deponie veranschaulicht, wogegen eine Verbrennungsanlage B eine thermische Verwertung illustriert. Auch eine Auftrennung und Isolierung der Einzelbestandteile durch die Aufbereitungsanlage 70 ist vorstellbar, so dass geeignete Bestandteile der beladenen Filtermodule 64 recycled und einem Wertstoffkreislauf zugeführt werden können. In diesem Fall werden die verbleibenden und nicht wieder- oder weiterverwertbaren Bestandteile deponiert oder thermisch verwertet.

Beim ersten in Figur 3 gezeigten Verwertungsweg I werden die beladenen Filtermodule 64 unabhängig davon, mit welcher Art Overspray sie beladen sind, in der Aufbereitungsanlage 70 einer gemeinsamen Behandlung unterzogen. Es ist somit unerheblich, aus welcher Beschichtungsstation 18, 20, 22 die beladenen Filtermodule 64 stammen.

Die Aufbereitungsanlage 70 ist bei diesem Verwertungsweg I der Oberflächenbehandlungsanlage 12 angegliedert und wird dann zweckmäßig von dem Betreiber der Oberflächenbehandlungsanlage 12 betrieben, so dass der Gebrauch der Filtermodule 46 und die Aufbereitung der beladenen Filtermodule 64 in einer Hand liegen. Auch die Verbrennungsanlage B kann vom gleichen Betreiber unterhalten werden, so dass gewonnene Wärmeenergie zum Betrieb der Oberflächenbehandlungsanlage 12 und/oder zum Betrieb der Aufbereitungsanlage 70 und dort zum Durchführen von einzelnen oder allen durchgeführten Aufbereitungsschritten genutzt werden kann.

Bei dem alternativen Verwertungsweg II werden die beladenen Filtermodule 64 dagegen für eine Aufbereitung abgeholt und in einem weiteren Verwertungsweg III in einer Aufbereitungsanlage 70 gemeinsam aufbereitet, die von der Oberflächenbehandlungsanlage 70 ausgegliedert ist. Gegebenenfalls wird diese ausgegliederte Aufbereitungsanlage von einem Fremdbetreiber geführt. Das dort gewonnene Aufbereitungsmaterial 100 kann wieder deponiert oder thermisch verwertet werden.

Die thermische Verwertung kann dabei auch wieder in einer Verbrennungsanlage B erfolgen, die zum Betreiber der Oberflächenbehandlungsanlage gehört.

Neben dem Verwertungsweg III ist auch eine bezogen auf die Art des Oversprays sortenreine Aufbereitung in einem Verwertungsweg IV möglich. Dies bedeutet, dass in der ausgegliederten Aufbereitungsanlage 70 jeweils solche beladene Filtermodule 64 gemeinsam aufbereitet werden, die von ein und derselben oder von artgleichen Beschichtungskabinen 10 stammen, so dass die Filtermodule 64 mit Overspray der gleichen Art beladen sind.

Dies ist im Verwertungsweg IV durch drei Aufbereitungsanlagen 70 veranschaulicht, die für die Aufbereitung eines jeweiligen beladenen Filtermoduls 64 stehen, das mit Primer-, Basislack- bzw. Decklack-Overspray beladen ist.

Jedes so sortenrein erhaltene Aufbereitungsprodukt 100 kann dann wieder wahlweise auf der Deponie A entsorgt oder in der Verbrennungsanlage B thermisch verwertet werden, wobei letztere wieder der Oberflächenbehandlungsanlage 12 zugeordnet sein kann.

Eine derartige sortenreine Aufbereitung der beladenen Filtermodule 64 kann in einem Verwertungsweg V auch alternativ von dem Betreiber der Oberflächenbehandlungsanlage 12 durchgeführt werden, was wieder durch jeweils eine separat gezeigte Aufbereitungsanlage 70 veranschaulicht ist. Die Aufbereitungsanlage 70 ist hier wieder der Oberflächenbehandlungsanlage 12 angegliedert. Die jeweils so von dem Betreiber der Oberflächenbehandlungsanlage 12 sortenrein erhaltene Aufbereitungsprodukte 100 können dann erneut wahlweise auf der Deponie A entsorgt oder in der Verbrennungsanlage B thermisch verwertet werden, wobei letztere wieder ebenfalls von dem Betreiber der Oberflächenbehandlungsanlage 12 geführt werden kann, um die gewonnene Energie in der eigenen Anlage zu nutzen.

Gegebenenfalls können die sortenrein erhaltenen Aufbereitungsprodukte 100 zu einem gemischten Aufbereitungsmaterial 102 zusammengeführt und als solches gemeinsam auf der Deponie A entsorgt oder in der Verbrennungsanlage B einer thermischen Verwertung zugeführt werden. Die Zusammenführung der sortenrein erhaltenen Aufbereitungsprodukte 100 kann auch bei dem Verwertungsweg IV erfolgen, was nicht nochmals eigens gezeigt ist.

Insgesamt kann durch die Aufbereitungs- und Wiederverwertungsstrategie eine energie- und ressourcenschonende Materialverwertung erfolgen. Auch im Falle der Deponierung des Aufbereitungsmaterials 100 können andere Stoffe mit aufbereitet werden, die so leichter und umweltschonender entsorgt werden können.

## Patentansprüche

1. Verfahren zum Betreiben einer Oberflächenbehandlungsanlage (12), bei welchem Overspray, der in einer oder mehreren Beschichtungskabinen (10) entsteht, von einem Luftstrom aufgenommen und zu einer oder mehreren Einweg-Abscheideeinheiten (44) geführt wird, in denen Overspray abgeschieden wird und welche jeweils nach Erreichen einer Grenzbeladung mit Overspray als beladene Einweg-Abscheideeinheiten (64) gegen eine leere Einweg-Abscheideeinheit (44) ausgetauscht werden,
**dadurch gekennzeichnet, dass**
aus beladenen Einweg-Abscheideeinheiten (64) ein Aufbereitungsmaterial (100; 102) erzeugt wird, welches eine spätere Verwertung ermöglicht,
wobei bei der Erzeugung des Aufbereitungsmaterials (100) aus beladenen Einweg-Abscheideeinheiten (64) die beladenen Einweg-Abscheideeinheiten (64) getrocknet werden.

2. Verfahren nach Anspruch 1, **dadurch gekennzeichnet, dass** das Aufbereitungsmaterial (100) in einer Aufbereitungsanlage (70) erzeugt wird, welche der Oberflächenbehandlungsanlage (12) angegliedert ist.

3. Verfahren nach Anspruch 1, dass das Aufbereitungsmaterial (100) in einer Aufbereitungsanlage (70) erzeugt wird, welche von der Oberflächenbehandlungsanlage (12) ausgegliedert ist.

4. Verfahren nach Anspruch 2 oder 3, **dadurch gekennzeichnet, dass** die Oberflächenbehandlungsanlage (12) mehrere Beschichtungskabinen (10) umfasst, in denen unterschiedliche Arten von Overspray entstehen, und
a) beladene Einweg-Abscheideeinheiten (64) unabhängig davon, mit welcher Art Overspray sie beladen sind, in der Aufbereitungsanlage (70) gemeinsam aufbereitet werden;
oder
b) jeweils solche beladene Filtermodule (64) gemeinsam aufbereitet werden, die von ein und derselben oder von artgleichen Beschichtungskabinen (10) stammen, so dass die gemeinsam aufbereiteten Filtermodule (64) mit Overspray der gleichen Art beladen sind und ein bezogen auf die Art des Overspray sortenreines Aufbereitungsmaterial (100) erhalten wird.

5. Verfahren nach Anspruch 4, **dadurch gekennzeichnet, dass** die Aufbereitung gemäß dem dort angegebenen Schritt b) durchgeführt wird und verschiedene sortenreine Aufbereitungsprodukte (100) zu einem gemischten Aufbereitungsmaterial (102) zusammengeführt werden.

6. Verfahren nach einem der Ansprüche 1 bis 5, **dadurch gekennzeichnet, dass** das Aufbereitungsmaterial (100; 102) einer thermischen Verwertung zugeführt wird.

7. Verfahren nach Anspruch 6, **dadurch gekennzeichnet, dass** die thermische Verwertung durch Verbrennen in einer Verbrennungsanlage (B) erfolgt.

8. Verfahren nach Anspruch 7, **dadurch gekennzeichnet, dass** die Verbrennungsanlage (B) der Oberflächenbehandlungsanlage (12) angegliedert ist.

9. Verfahren nach einem der Ansprüche 6 bis 8, **dadurch gekennzeichnet, dass** Energie, die bei der thermischen Verwertung gewonnen wird, zum Betreiben der Oberflächenbehandlungsanlage (12) und/oder der Aufbereitungsanlage (70) genutzt wird.

10. Verfahren nach einem der Ansprüche 1 bis 9, **dadurch gekennzeichnet, dass** bei der Erzeugung des Aufbereitungsmaterials (100) aus beladenen Einweg-Abscheideeinheiten (64) einer oder mehrere der folgenden Schritte durchgeführt werden:
a) Grobes Zerkleinern oder Verkleinern der beladenen Abscheideeinheiten (64) zu Filterteilen (82) oder Filterpaketen (86);
b) Schreddern der beladenen Abscheideeinheiten (64) oder von Filterteilen (82) oder von Filterpaketen (86) zu Grobschreddermaterial (92) oder zu Feinschreddermaterial (96);
c) Zumischen von Zusätzen beim Trocknen der Einweg-Abscheideeinheiten (64) oder bei einem oder mehreren der obigen Schritte a) oder b)..

## Claims

1. Method for operating a surface treatment installation (12), in which method overspray which is formed in one or more coating booths (10) is taken up by an air stream and carried to one or more disposable separating units (44), in which overspray is separated out and which are in each case exchanged, as a laden disposable separating unit (64), with an empty disposable separating unit (44) after a limit loading with overspray has been reached,
**characterized in that**
a processed material (100; 102) which makes subsequent utilization possible is produced from laden disposable separating units (64),
wherein, during the production of the processed material (100) from laden disposable separating units (64), the laden disposable separating units (64) are dried.

2. Method according to Claim 1, **characterized in that** the processed material (100) is produced in a processing installation (70) which is attached to the surface treatment installation (12).

3. Method according to Claim 1, that the processed material (100) is produced in a processing installation (70) which is separated from the surface treatment installation (12).

4. Method according to Claim 2 or 3, **characterized in that** the surface treatment installation (12) comprises multiple coating booths (10), in which different types of overspray are formed, and
a) laden disposable separating units (64) are processed together in the processing installation (70) irrespective of the type of overspray with which they are laden;
or
b) in each case laden filter modules (64) which come from one and the same or the same type of coating booth (10) are processed together, with the result that the filter modules (64) processed together are laden with overspray of the same type and a processed material (100) of a single type in terms of the type of overspray is obtained.

5. Method according to Claim 4, **characterized in that** the processing is carried out according to the step b) stated in said claim, and different single-type processed materials (100) are combined to form a mixed processed material (102).

6. Method according to one of Claims 1 to 5, **characterized in that** the processed material (100; 102) is fed for thermal utilization.

7. Method according to Claim 6, **characterized in that** the thermal utilization is realized by incineration in an incineration installation (B).

8. Method according to Claim 7, **characterized in that** the incineration installation (B) is attached to the surface treatment installation (12).

9. Method according to one of Claims 6 to 8, **characterized in that** energy recovered during the thermal utilization is used for operating the surface treatment installation (12) and/or the processing installation (70).

10. Method according to one of Claims 1 to 9, **characterized in that**, during the production of the processed material (100) from laden disposable separating units (64), one or more of the following steps are carried out:
a) coarsely comminuting or reducing in size the laden separating units (64) to form filter parts (82) or filter packs (86);
b) shredding the laden separating units (64) or filter parts (82) or filter packs (86) to form coarse shredded material (92) or to form fine shredded material (96);
c) admixing additives during the drying of the disposable separating units (64) or during one or more of the above steps a) or b).

## Revendications

1. Procédé de fonctionnement d'une installation de traitement de surface (12), dans lequel un excédent de pulvérisation qui se produit dans une ou plusieurs cabines de revêtement (10) est absorbé par un flux d'air et guidé jusqu'à une ou plusieurs unités de séparation à usage unique (44), dans lesquelles l'excédent de pulvérisation est séparé et lesquelles sont respectivement, après avoir atteint une charge limite en excédent de pulvérisation en tant qu'unités de séparation à usage unique chargées (64), remplacées par une unité de séparation à usage unique vide (44),
**caractérisé en ce**
**qu'**une matière de préparation (100 ; 102) est produite à partir d'unités de séparation à usage unique chargées (64), laquelle permet une valorisation ultérieure,
les unités de séparation à usage unique chargées (64) étant séchées lors de la production de la matière de préparation (100) à partir d'unités de séparation à usage unique chargées (64).

2. Procédé selon la revendication 1, **caractérisé en ce que** la matière de préparation (100) est produite dans une installation de préparation (70), laquelle est associée à l'installation de traitement de surface (12).

3. Procédé selon la revendication 1, **caractérisé en ce que** la matière de préparation (100) est produite dans une installation de préparation (70), laquelle n'est pas associée à l'installation de traitement de surface (12).

4. Procédé selon la revendication 2 ou 3, **caractérisé en ce que** l'installation de traitement de surface (12) comporte plusieurs cabines de revêtement (10) dans lesquelles différents types d'excédent de pulvérisation se produisent, et
a) des unités de séparation à usage unique chargées (64) sont préparées conjointement dans l'installation de préparation (70) indépendamment du type d'excédent de pulvérisation avec lequel elles sont chargées ;
ou
b) des modules de filtration chargés (64) qui proviennent d'une seule et même cabine de revêtement ou de cabines de revêtement du même type (10) sont traités conjointement, de sorte que les modules de filtration (64) traités conjointement sont chargés avec de l'excédent de pulvérisation du même type et une matière de préparation (100) d'une seule sorte par rapport au type de l'excédent de pulvérisation est obtenue.

5. Procédé selon la revendication 4, **caractérisé en ce que** la préparation selon l'étape b) qui y est indiquée est effectuée et différents produits de préparation (100) d'une seule sorte sont réunis en une matière de préparation mélangée (102).

6. Procédé selon l'une des revendications 1 à 5, **caractérisé en ce que** la matière de préparation (100 ; 102) est amenée à une valorisation thermique.

7. Procédé selon la revendication 6, **caractérisé en ce que** la valorisation thermique s'effectue par incinération dans une installation d'incinération (B).

8. Procédé selon la revendication 7, **caractérisé en ce que** l'installation d'incinération (B) est associée à l'installation de traitement de surface (12).

9. Procédé selon l'une des revendications 6 à 8, **caractérisé en ce que** l'énergie qui est obtenue lors de la valorisation thermique est utilisée pour le fonctionnement de l'installation de traitement de surface (12) et/ou de l'installation de préparation (70).

10. Procédé selon l'une des revendications 1 à 9, **caractérisé en ce que** lors de la production de la matière de préparation (100) à partir d'unités de séparation à usage unique chargées (64), une ou plusieurs des étapes suivantes sont effectuées :
a) broyage grossier ou réduction de la taille des unités de séparation chargées (64) pour former des parties de filtre (82) ou des ensembles de filtration (86) ;
b) déchiquetage des unités de séparation chargées (64) ou de parties de filtre (82) ou d'ensembles de filtration (86) pour former une matière déchiquetée grossière (92) ou une matière déchiquetée fine (96) ;
c) ajoute d'additifs lors du séchage des unités de séparation à usage unique (64) ou lors d'une ou plusieurs des étapes a) ou b) ci-dessus.
